# EUROPÄISCHE PATENTSCHRIFT

(11) **EP 1 141 065 B1**
(45) Veröffentlichungstag und Bekanntmachung des Hinweises auf die Patenterteilung: **13.10.2004**
(21) Anmeldenummer: 99962222.8
(22) Anmeldetag: 06.12.1999
(51) Int. Cl.: C08G 18/62, C09D 175/04, C08G 18/08, C08G 18/28

(54) **WAESSRIGE 2K-PUR-SYSTEME MIT ERHÖHTER SCHLAGZÄHIGKEIT, HOHEN BESTÄNDIGKEITSEIGENSCHAFTEN UND GUTEN OPTISCHEN EIGENSCHAFTEN, EIN VERFAHREN ZU IHRER HERSTELLUNG UND IHRE VERWENDUNG**
AQUEOUS TWO-COMPONENT POLYURETHANE SYSTEMS WITH INCREASED IMPACT RESISTANCE, HIGH STABILITY AND GOOD OPTICAL PROPERTIES, METHOD FOR PRODUCING SAME AND THEIR USE
SYSTEMES AQUEUX DE POLYURETHANE A DEUX COMPOSANTES AYANT UNE GRANDE RESISTANCE AU CHOC, UNE GRANDE DURABILITE ET DE BONNES PROPRIETES OPTIQUES, LEUR PROCEDE DE PRODUCTION ET LEUR UTILISATION

(30) Priorität: 18.12.1998 DE 19858732
(43) Veröffentlichungstag der Anmeldung: 10.10.2001
(73) Patentinhaber: Bayer MaterialScience AG, 51368 Leverkusen (DE)
(72) Erfinder: PROBST, Joachim, D-51375 Leverkusen (DE); BISKUP, Ulrich, D-51375 Leverkusen (DE); KOBUSCH, Claus, D-40667 Meerbusch (DE); IRLE, Christoph, D-47800 Krefeld (DE)
(86) Internationale Anmeldenummer: PCT/EP1999/009522
(87) Internationale Veröffentlichungsnummer: WO 2000/037521

(56) Entgegenhaltungen:
- EP-A- 0 557 844
- EP-A- 0 842 991
- US-A- 5 670 600

## Beschreibung

Die Erfindung betrifft wäßrige Zweikomponenten-Polyurethan-Systeme, ein Verfahren zu ihrer Herstellung und ihre Verwendung zur Herstellung von Beschichtungen mit erhöhter Schlagzähigkeit, hohen Beständigkeitseigenschaften und hervorragenden optischen Eigenschaften.

In der Oberflächen-Technologie spielen ökologische Fragen eine bedeutende Rolle. Ein besonders vordringliches Problem ist die Reduzierung der für Lacke und Beschichtungsstoffe verwendeten Mengen organischer Lösemittel.

Aus der EP-A 358 979 ist bekannt, daß bei Verwendung von ausgewählten Polyhydroxylverbindungen auf Vinylpolymerisat-Basis als Reaktionspartner für organische Polyisocyanate mit freien Isocyanatgruppen wäßrige Zweikomponenten-Polyurethan-Systeme dadurch hergestellt werden können, daß man die Polyisocyanate mit freien Isocyanatgruppen in der wäßrigen Polymerisatlösung bzw. -dispersion emulgiert. Die in der EP-A 0 358 979 beschriebenen Polyhydroxylverbindungen werden dabei vorzugsweise in organischer Lösung radikalisch polymerisiert und dann anschließend in die wäßrige Lösung eines Neutralisationsmittels - meist Ammoniak oder tertiäre Amine - überführt und wäßrig gelöst. Das organische Lösungsmittel kann dabei nach Bedarf im wäßrigen Milieu verbleiben oder destillativ entfernt werden.

Die auf diese Art hergestellten Polymerpolyole sind in ihrer Morphologie normalerweise einphasig, weisen also auch nach Vernetzung und Filmbildung mit geeigneten hydrophoben und/oder hydrophilierten Polyisocyanaten entweder thermoplastische oder elastomere Eigenschaften auf. Zur Herstellung von Polyurethan-Filmen mit den Eigenschaften eines thermoplastischen Elastomers, das sowohl ausgezeichnete Zähigkeitseigenschaften als auch ein hohes Festigkeitsniveau besitzt, ist ein einphasiger Aufbau eines solchen Polymerpolyols im allgemeinen nicht ausreichend.

EP-A 0 842 991 beschreibt wässrige Polyurethanbeschichtungen basierend auf einer silanmodifizierten, hydrophilen Polyisocyanatkomponente und zweiphasig aufgebauten Emulsionspolymerisaten mit einem gummiartigen Kern und einer harten Schale, welche sich als haftungsverbessernde Primer zur Beschichtung zahlreicher Substrate eignen. In wie weit sich derartige Systeme auch zur Herstellung von Beschichtungen mit verbesserter Härte und/oder Schlagzähigkeit eignen, ist der Offenbarung nicht zu entnehmen.

Es hat sich nun gezeigt, dass zwei- oder mehrphasig aufgebaute Polymerpolyolsysteme bestimmter Zusammensetzung, welche in Kern und Schale sowohl Acrylsäure- als auch HydroxyaIkyl(meth)acrylateinheiten aufweisen mit geeigneten Polyisocyanaten zu Polyurethan-Beschichtungen mit hohem Zähigkeitsniveau insbesondere bei tiefen Temperaturen und hoher Härte führen.

Gegenstand der Erfindung sind daher Zweikomponenten-Polyurethanbeschichtungsmittel, welche als Bindemittelkomponente a) ein Pfropfpolymerisat, bestehend aus mindestens zwei Polyolkomponenten, wobei die erste als eine elastische Komponente a1) kovalent oder adsorptiv mit einer zweiten thermoplastischen Komponente a2) verknüpft ist, und eine Polyisocyanatkomponente b) mit einer Viskosität von höchstens 10.000 mPa.s enthalten, bestehend aus mindestens einem organischen Polyisocyanat in einem NCO/OH-Äquivalentverhältnis von 0,2:1 bis 5:1 entsprechenden Mengen, dadurch gekennzeichnet, daß die Komponente a) eine wäßrige Lösung und/oder Dispersion des obengenannten Pfropfpolymeren darstellt, und in der die Polyisocyanatkomponente b) emulgiert bzw. solubilisiert vorliegt.

Bei der Komponente a) handelt es sich um eine Polyolkomponente, die aus mindestens zwei kovalent oder adsorptiv verknüpften Polyolphasen a1) als Elastomerbestandteil und a2) als Thennoplastbestandteil auf Vinylpolymerisat-Basis besteht.

Hierbei kann sowohl der Elastomerbestandteil a1) als Pfropfgrundlage dienen, auf die der Thermoplastbestandteil a2) radikalisch aufgepfropft worden ist, als auch der Thermoplastbestandteil a2) als Pfropfgrundlage, auf die der Elastomerbestandteil a1) gepfropft wurde.

Bei Polyolbestandteil a1) handelt es sich um eine Elastomerkomponente, die Hydroxylgruppen, Sulfonat- und/oder Carboxylatgruppen, vorzugsweise Carboxylatgruppen und gegebenenfalls Sulfonsäure- und/oder Carboxylgruppen, vorzugsweise Carboxylgruppen enthält. Bei Komponente a1) handelt es sich um Polymerisate von olefinisch ungesättigten Monomeren, die vorzugsweise eine Hydroxylzahl von 8 bis 264, vorzugsweise 16 bis 198 mg KOH/g Festharz, eine Säurezahl (bezogen auf die Summe der nichtneutralisierten und neutralisierten Säuregruppen) von 0 bis 100, vorzugsweise 3 bis 50 mg KOH/g Festharz aufweisen. Die Elastomerkomponente a1) weist eine Glastemperatur (gemessen mit der DSC- bzw. der DMA-Methode) von höchstens -10°C auf.

Der Thermoplastbestandteil a2) ist ebenfalls eine Polyolkomponente, die Hydroxylgruppen, Sulfonat- und/oder Carboxylatgruppen, vorzugsweise Carboxylatgruppen und gegebenenfalls Sulfonsäure- und/oder Carboxylgruppen, vorzugsweise Carboxylgruppen enthält. Komponente a2) ist ebenfalls ein Polymerisat von olefinisch ungesättigten Monomeren, die eine Hydroxylzahl von 16 bis 264, vorzugsweise 33 bis 198 mg KOH/g Festharz, eine Säurezahl (bezogen auf die Summe der nichtneutralisierten und neutralisierten Säuregruppen) von 3 bis 100, vorzugsweise 5 bis 50 mg KOH/g Festharz aufweisen. Die Thermoplastkomponente a2) weist eine Glastemperatur von mindestens +10°C auf.

Elastomerkomponenten a1) sind aus den folgenden Comonomerkomponenten aufgebaut:
- a1 a) 0,4-7,7 Gew.-%: Acrylsäure und/oder Methacrylsäure;
- a1 b) 3,4-50,8 Gew.-%: Acrylsäure-2-hydroxyethylester und/oder Acrylsäurehydroxypropylester und/oder Methacrylsäure-2-hydroxyethylester und/oder Methacrylsäurehydroxypropylester;
- a1 c) 0-20 Gew.-%: Methacrylsäuremethylester und/oder Acrylnitril und/oder Methacrylnitril und/oder Styrol bzw. substituierte Styrole als Comonomere mit Festigkeit und Härte verleihendem Charakter;
- a1 d) 70-96 Gew.-%: Methacrylsäurealkylester mit 2 bis 12 C-Atomen im Alkylrest und/oder Acrylsäurealkylester mit 1 bis 12 C-Atomen im Alkylrest als elastifizierende Komponenten;
- a1 e) 0-5 Gew.-%: vernetzende Comonomere wie z.B. Divinylbenzol, Ethylenglykoldi(meth)acrylat, Propylenglykoldi(meth)acrylat, Butylenglykoldi(meth)acrylat, Allyl(meth)acrylat;
wobei die Summe der Gew.-% von a1 a) bis a1 e) 100 ergibt und wobei die Glastemperatur unter -10°C liegt.

Thermoplastkomponenten a2) sind aus den folgenden Comonomerkomponenten aufgebaut:
- a2 a) 0,6-7,7 Gew.-%: Acrylsäure und/oder Methacrylsäure;
- a2 b) 6,8-50,8 Gew.-%: Acrylsäure-2-hydroxyethylester und/oder Acrylsäurehydroxypropylester und/oder Methacrylsäure-2-hydroxyethylester und/oder Methacrylsäurehydroxypropylester;
- a2 c) 30-80 Gew.-%: Methacrylsäuremethylester und/oder Acrylnitril und/oder Methacrylnitril und/oder Styrol bzw. substituierte Styrole als Comonomere mit Festigkeit und Härte verleihendem Charakter;
- a2 d) 5-40 Gew.-%: Methacrylsäurealkylester mit 2 bis 12 C-Atomen im Alkylrest und/oder Acrylsäurealkylester mit 1 bis 12 C-Atomen im Alkylrest als elastifizierende Komponenten;
- a2 e) 0-5 Gew.-%: vernetzende Comonomere wie z.B. Divinylbenzol, Ethylenglykoldi(meth)acrylat, Propylenglykoldi(meth)acrylat, Butylenglykoldi(meth)acrylat, Allyl(meth)acrylat,
wobei die Summe der Gew.-% von a2 a) bis a2 e) 100 ergibt und wobei die Glastemperatur über +10°C liegt.

Bevorzugt werden die Elastomerkomponente a1) und die Thermoplastkomponente a2) in Gewichtsverhältnissen von 10:90 bis 60:40 (bezüglich Festharz) bepfropft.

Gegenstand der Erfindung ist auch ein Verfahren zur Herstellung eines Zweikomponenten-Polyurethanbeschichtungsmittels, welches als Bindemittelkomponente a) ein Pfropfpolymerisat, bestehend aus mindestens zwei Polyolkomponenten, wobei die erste als eine elastische Komponente a1) kovalent oder adsorptiv mit einer zweiten thermoplastischen Komponente a2) verknüpft ist, und eine Polyisocyanatkomponente b) mit einer Viskosität von höchstens 10.000 mPa.s enthält, bestehend aus mindestens einem organischen Polyisocyanat in einem NCO/OH-Äquivalentverhältnis von 0,2:1 bis 5:1 entsprechenden Mengen, dadurch gekennzeichnet, daß die Komponente a) eine wäßrige Lösung und/oder Dispersion des obengenannten Pfropfpolymeren darstellt, und in der die Polyisocyanatkomponente b) emulgiert bzw. solubilisiert vorliegt.

Die Herstellung der Hydroxylgruppen aufweisenden Polymerisatkomponente a) erfolgt durch an sich bekannte Verfahren der radikalischen Polymerisation in organischer oder in wäßriger Phase. Bevorzugt erfolgt die Herstellung der Polymerisate im Eintopfverfahren durch die Methode der radikalischen Emulsionspolymerisation im wäßrigen Milieu.

Zunächst wird entweder die Elastomerkomponente a1) bzw. die Thermoplastkomponente a2) als Pfropfgrundlage hergestellt und anschließend die Thermoplastkomponente a2) bzw. die Elastomerkomponente a1) radikalisch aufgepfropft.

Möglich sind kontinuierliche oder diskontinuierliche Polymerisationsverfahren. Von den kontinuierlichen Verfahren sind das Batch- und das Zulaufverfahren zu nennen, wobei letzteres bevorzugt ist. Bei dem Zulaufverfahren wird Wasser allein oder mit einem Teil eines anionischen Emulgators, gegebenenfalls unter Beimischung eines nichtionischen Emulgators, sowie mit einem Teil der Monomermischung a1) bzw. a2) vorgelegt, auf die Polymerisationstemperatur erwärmt, die Polymerisation im Fall einer Monomervorlage radikalisch gestartet und das restliche Monomergemisch zusammen mit einem Initiatorgemisch und dem Emulgator im Verlauf von 0,5 bis 10 Stunden, vorzugsweise 1 bis 6 Stunden, zudosiert. Die so hergestellte Polymerisatdispersion fungiert hierbei als Pfropfgrundlage, auf die in einer zweiten Zulaufstufe (0,5 bis 10 Stunden) entweder die Thermoplastphase a2) oder die Elastomerphase a1) radikalisch aufgepfropft wird. Gegebenenfalls wird anschließend mit weiterem Initiator nachaktiviert, um die Polymerisation bis zu einem Umsatz von mindestens 99 % durchzuführen.

Hierbei wird ein Latex-System gebildet, welches im allgemeinen teilgepfropfte Latex-Systeme in Abmischung mit der ursprünglichen, nicht bepfropften Pfropfgrundlage und nicht aufgepfropften Elastomerteilchen a1) bzw. Thermoplastteilchen a2) enthält. Im Idealfall haben die Teilchen dieses Latexsystems eine Kern-Schale-Morphologie.

Die bei der Polymerisation eingesetzten Emulgatoren sind anionischer und/oder nichtionischer Natur. Von den Emulgatoren mit anionischer Natur sind solche mit Carboxylatgruppen, Sulfat-, Sulfonat-, Phosphat- oder Phosphonatgruppen einsetzbar. Bevorzugt sind Emulgatoren mit Sulfat-, Sulfonat-, Phosphat- oder Phosphonatgruppen. Die Emulgatoren können niedermolekular oder hochmolekular sein. Letztere werden z.B. in der DE-A 3 806 066 und DE-A 1 953 349 beschrieben.

Bevorzugt sind solche anionischen Emulgatoren, die mit Ammoniak oder Aminen neutralisiert worden sind. Besonders bevorzugt sind Emulgatoren, die aus langkettigen Alkoholen oder substituierten Phenolen sowie Ethylenoxidketten mit Polymerisationsgraden zwischen 2 und 100 und abschließender Monoschwefelsäureestergruppe bzw. Phosphorsäuremono- und -diestergruppen aufgebaut sind. Als Neutralisationsmittel dient hierbei im allgemeinen Ammoniak. Sie können dem Emulsionsansatz einzeln oder in beliebigen Mischungen zugesetzt werden.

Als nichtionogene Emulgatoren, die meist in Kombination mit den obengenannten anionischen Emulgatoren eingesetzt werden können, eignen sich Umsetzungsprodukte von aliphatischen, araliphatischen, cycloaliphatischen oder aromatischen Carbonsäuren, Alkoholen, Phenolderivaten bzw. Aminen mit Epoxiden wie z.B. Ethylenoxid. Beispiele dafür sind Umsetzungsprodukte von Ethylenoxid mit Carbonsäuren wie z.B. Laurinsäure, Stearinsäure, Ölsäure, den Carbonsäuren des Ricinusöls, Abietinsäure, mit längerkettigen Alkoholen wie Oleylalkohol, Laurylalkohol, Stearylalkohol, mit Phenolderivaten wie z.B. sustituierten Benzyl-, Phenylphenolen, Nonylphenol und mit längerkettigen Aminen wie z.B. Dodecylamin und Stearylamin. Bei den Umsetzungsprodukten mit Ethylenoxid handelt es sich um Oligo- bzw. Polyether mit Polymerisationsgraden zwischen 2 und 100, vorzugsweise von 5 bis 50. Diese Emulgatoren werden in Mengen von 0,1 bis 10 Gew.-%, bezogen auf die Mischung der Monomeren, zugegeben.

Als gegebenenfalls mitzuverwendende Colösemittel kommen sowohl wasserlösliche als auch wasserunlösliche Lösungsmittel in Betracht. Als solche kommen beispielsweise Aromaten wie Benzol, Toluol, Xylol, Chlorbenzol, Ester wie Ethylacetat, Butylacetat, Etherester wie Methylglykolacetat, Ethylglykolacetat, Methoxypropylacetat, Methoxybutylacetat, Ether wie Butylglykol, Tetrahydrofuran, Dioxan, Ethylglykolether, Ether des Diglykols, Ether des Dipropylenglykols, Ketone wie Aceton, Methylethylketon, Methylisobutylketon, Trichlormonofluorethan, cyclische Amide wie N-Methylpyrrolidon oder N-Methylcaprolactam in Betracht.

Die durch Radikale initiierte Polymerisation kann durch wasserlösliche oder wasserunlösliche Initiatoren bzw. Initiatorsysteme ausgelöst werden, deren Halbwertszeiten des Radikalzerfalls bei Temperaturen von 10°C bis 100°C zwischen 0,01 und 400 min. liegen. Im allgemeinen erfolgt die Polymerisation in wäßriger Emulsion im genannten Temperaturbereich, vorzugsweise zwischen 30 und 90°C, unter einem Druck von 10³ bis 2 x 10⁴ mbar, wobei sich die genaue Polymerisationstemperatur nach der Art des Initiators richtet. Die Initiatoren werden im allgemeinen in Mengen von 0,05 bis 6 Gew.-%, bezogen auf die Gesamtmenge an Monomeren, eingesetzt.

Geeignete Initiatoren sind z.B. wasserlösliche und -unlösliche Azoverbindungen wie Azoisobuttersäuredinitril oder 4,4'-Azo-bis-(4-cyanpentansäure) sowie anorganische und organische Peroxide wie z.B. Dibenzoylperoxid, t-Butylperpivalat, t-Butyl-per-2-ethylhexanoat, t-Butylperbenzoat, t-Butylhydroperoxid, Di-t-butylperoxid, Cumolhydroperoxid, Dicyclohexyl- und Dibenzylperoxydicarbonat sowie die Natrium-, Kalium- oder Ammoniumsalze der Peroxodischwefelsäure und Wasserstoffperoxid. Die Peroxodisulfate und Wasserstoffperoxide werden oft in Kombination mit Reduktionsmitteln wie z.B. dem Natriumsalz der Formamidinsulfinsäure (Rongalit C), Ascorbinsäure oder Polyalkylenpolyaminen eingesetzt. Hiermit wird im allgemeinen eine deutliche Erniedrigung der Polymerisationstemperatur erzielt.

Zur Regelung des Molekulargewichts der Polymeren können übliche Regler eingesetzt werden wie z.B. n-Dodecylmercaptan, t-Dodecylmercaptan, Diisopropylxanthogendisulfid, Di(Methylentrimethylolpropan)xanthogendisulfid und Thioglykol. Ebenso ist der Einsatz von allylischen Verbindungen wie z.B. dem Dimeren von α-Methylstyrol möglich. Sie werden in Mengen von höchstens 3 Gew.-%, bezogen auf das Monomergemisch, zugegeben.

Nach beendeter Polymerisation werden die in wäßriger Dispersion vorliegenden Polymerisate gegebenenfalls mit Neutralisationsmittel bis zu Neutralisationsgraden von 10 bis 150 % (rechnerisch), vorzugsweise 30 bis 100 %, versetzt. Hierzu werden als Neutralisationsmittel anorganische Basen, Ammoniak oder Amine zugesetzt. Als anorganische Basen können z.B. Natriumhydroxid, Kaliumhydroxid, als Amine neben Ammoniak Trimethylamin, Triethylamin, Dimethylethanolamin, Methyldiethanolamin, Triethanolamin etc. eingesetzt werden. Die Neutralisationsmittel können sowohl im stöchiometrischen Unter- als auch Überschuß eingesetzt werden.

Insbesondere bei Verwendung eines stöchiometrischen Überschusses an Neutralisationsmittel ist jedoch darauf zu achten, daß durch den Polyelektrolytcharakter der Polymeren eine deutliche Viskositätszunahme erfolgen kann.

Eventuell zugesetzte Colösungsmittel können in der wäßrigen Dispersion in Mengen bis zu ca. 20 Gew.-%, bezogen auf die wäßrige Phase, verbleiben. Die Colösemittel können aber auch nach Bedarf im Anschluß an die Polymerisation destillativ entfernt werden.

Die Polymerdispersionen a), die aus der Weichphase a1) und der Hartphase a2) bestehen, besitzen im allgemeinen Feststoffgehalte von 20 bis 60 Gew.-%, vorzugsweise 30 bis 50 Gew.-%, und Viskositäten von 10 bis 100.000, vorzugsweise 10 bis 10.000 mPa.s bei 23°C und pH-Werte von 5 bis 10, vorzugsweise 6 bis 9. Das Gewichtsverhältnis von Weichphase a1) zur Hartphase a2) liegt bevorzugt zwischen 10:90 bis 60:40 (a1:a2).

Die mittleren Teilchendurchmesser in der Dispersion (gemessen mittels Laserkorrelationsspektroskopie) liegen im allgemeinen zwischen 50 und 500 nm, bevorzugt von 80 bis 200 nm.

Bei der Polyisocyanatkomponente b) handelt es sich um beliebige organische Polyisocyanate mit aliphatisch, cycloaliphatisch, araliphatisch und/oder aromatisch gebundenen, freien Isocyanatgruppen, die bei Raumtemperatur flüssig sind. Die Polyisocyanatkomponente b) weist bei 23°C im allgemeinen eine Viskosität von höchstens 10.000, vorzugsweise höchstens 1.000 mPa.s auf. Besonders bevorzugt handelt es sich bei der Polyisocyanatkomponente b) um Polyisocyanate oder Polyisocyanatgemische mit ausschließlich aliphatisch und/oder cycloaliphatisch gebundenen Isocyanatgruppen einer zwischen 2,2 und 5,0 liegenden (mittleren) NCO-Funktionalität und einer Viskosität bei 23°C von höchstens 500 mPa.s.

Gegebenenfalls können die Polyisocyanate in Abmischung mit geringen Mengen an inerten Lösungsmitteln zum Einsatz gelangen, um die Viskosität auf einen Wert innerhalb der genannten Bereiche abzusenken. Die Menge derartiger Lösungsmittel wird so bemessen, daß in den letztendlich erhaltenen erfindungsgemäßen Beschichtungsmitteln bis zu 20 Gew.-% Lösungsmittel, bezogen auf die Menge an Wasser, vorliegt, wobei auch das gegebenenfalls in den Polymerisatdispersionen oder -lösungen noch vorliegende Lösungsmittel mit in die Berechnung eingeht. Als Zusatzmittel für die Polyisocyanate geeignete Lösungsmittel sind beispielsweise aromatische Kohlenwasserstoffe wie beispielsweise "Solventnaphtha" oder auch Lösungsmittel der bereits oben beispielhaft genannten Art.

Als Komponente b) geeignete Polyisocyanate sind insbesondere die sogenannten "Lackpolyisocyanate" mit aromatisch oder (cyclo)aliphatisch gebundenen Isocyanatgruppen, wobei die letztgenannten aliphatischen Polyisocyanate, wie bereits ausgeführt, besonders bevorzugt sind.

Ganz besonders bevorzugt sind Polyisocyanate mit (teil)hydrophiliertem Charakter.

Sehr gut geeignet sind beispielsweise "Lackpolyisocyanate" auf Basis von Hexamethylendiisocyanat oder von 1-Isocyanato-3,3,5-trimethyl-5-isocyanatomethyl-cyclohexan (IPDI) und/oder Bis-(isocyanatocyclohexyl)-methan, insbesondere solche, welche ausschließlich auf Hexamethylendiisocyanat basieren.

Unter "Lackpolyisocyanaten" auf Basis dieser Diisocyanate sind die an sich bekannten Biuret-, Urethan-, Uretdion- und/oder Isocyanuratgruppen aufweisenden Derivate dieser Diisocyanate zu verstehen, die im Anschluß an ihre Herstellung in bekannter Weise, vorzugsweise durch Destillation von überschüssigem Ausgangsdiisocyanat bis auf einen Restgehalt von weniger als 0,5 Gew.-% befreit worden sind. Zu den bevorzugten, erfindungsgemäß zu verwendenden aliphatischen Polyisocyanaten gehören den obengenannten Kriterien entsprechende Biuretgruppen aufweisende Polyisocyanate auf Basis von Hexamethylendiisocyanat, wie sie beispielsweise nach den Verfahren der US-A 3 124 605, 3 358 010, 3 903 126, 3 903 127 oder 3 976 622 erhalten werden können, und die aus Gemischen von N,N',N"-Tris-(6-isocyanatohexyl)-biuret mit untergeordneten Mengen an seinen höheren Homologen bestehen, sowie die den genannten Kriterien entsprechenden cyclischen Trimerisate von Hexamethylendiisocyanat, wie sie gemäß US-PS 4 324 879 erhalten werden können, und die im wesentlichen aus N,N',N"-Tris-(6-isocyanatohexyl)-isocyanurat im Gemisch mit untergeordneten Mengen an seinen höheren Homologen bestehen. Insbesondere bevorzugt werden den genannten Kriterien entsprechende Gemische aus Uretdion- und/oder Isocyanuratgruppen aufweisende Polyisocyanate auf Basis von Hexamethylendiisocyanat, wie sie durch katalytische Oligomerisierung von Hexamethylendiisocyanat unter Verwendung von Trialkylphosphinen entstehen. Besonders bevorzugt sind die zuletzt genannten Gemische einer Viskosität bei 23°C von höchstens 500 mPa.s und einer zwischen 2,2 und 5,0 liegenden NCO-Funktonalität.

Bei den erfindungsgemäß ebenfalls geeigneten, jedoch weniger bevorzugten aromatischen Polyisocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate, wie sie durch Umsetzung von überschüssigen Mengen an 2,4-Diisocyanatotoluol mit mehrwertigen Alkoholen wie Trimethylolpropan und anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanatoisocyanurate, die ebenfalls im Anschluß an ihre Herstellung vorzugsweise destillativ von überschüssigen monomeren Diisocyanaten befreit worden sind.

Als besonders bevorzugte Vemetzerkomponente für die erfindungsgemäßen Bindemitteldispersionen können beliebige wasserdispergierbare Polyisocyanate mit aliphatisch, cycloaliphatisch, araliphatisch und/oder aromatisch gebundenen Isocyanatgruppen zum Einsatz kommen.

Geeignet sind beispielsweise ionische modifizierte, z.B. Carboxylatgruppen und gegebenenfalls Polyethereinheiten enthaltende Polyisocyanate der in der EP-A 510 438 und EP-A 548 669 genannten Art, Sulfonatgruppen enthaltende Polyisocyanate der in der EP-A703 255 genannten Art oder Phosphat- bzw. Phosphonatgruppen enthaltende Polyisocyanate, wie sie in der WO 97/31960 beschrieben sind.

Bevorzugt finden als Vernetzerkomponenten für die erfindungsgemäßen Bindemitteldispersionen jedoch rein nichtionische, durch Umsetzung mit Polyethylenoxidpolyetheralkoholen hydrophil modifizierte Polyisocyanate Verwendung. Solche Polyisocyanate sind beispielsweise aus den EP-A 206 059, EP-A 516 277, EP-B 540 985, EP-A 645 410, EP-A 680 983, der US-PS 5 200 489 oder der Deutschen Patentanmeldung 19822891.0 bekannt. Ebenfalls geeignete nichtionisch-hydrophilierte Polyisocyanate sind die in der EP-B 486 881 genannten, spezielle Emulgatoren aus Diisocyanaten und monofunktionellen Polyetheralkoholen enthaltenden Polyisocyanatzubereitungen.

Besonders bevorzugte wasserdispergierbare Polyisocyanate sind die obengenannten, mit Hilfe von Polyethylenoxidpolyetheralkoholen hydrophil modifizierten Polyisocyanate mit ausschließlich aliphatisch und/oder cycloaliphatisch gebundenen Isocyanatgruppen. Ganz besonders bevorzugt sind wasserdispergierbare Polyisocyanate der genannten Art mit Uretdion- und/oder Isocyanuratstruktur auf Basis von 1,6-Diisocyanatohexan (HDI), 1-Isocyanato-3,3,5-trimethyl-5-isocyanatomethylcyclohexan (Isophorondiisocyanat, IPDI), und/oder 4,4'-Diisocyanatodicyclohexylmethan.

Die Polyisocyanatkomponente b) kann im übrigen aus beliebigen Gemischen der beispielhaft genannten Polyisocyanate bestehen.

Zur Herstellung der gebrauchsfertigen Beschichtungsmittel wird die Polyisocyanatkomponente b) in der wäßrigen Dispersion der Polymerisate a) emulgiert, wobei das gelöste bzw. dispergierte Polymerisat gleichzeitig die Funktion eines Emulgators bzw. der Reaktivkomponente für das zugesetzte Polyisocyanat übernimmt.

Die Durchmischung kann durch einfaches Verrühren bei Raumtemperatur erfolgen. Die Menge der Polyisocyanatkomponente wird dabei so bemessen, daß ein NCO/OH-Äquivalentverhältnis, bezogen auf die Isocyanatgruppen der Komponente b) und die alkoholischen Hydroxylgruppen der Komponente a) von 0,2:1 bis 5:1, vorzugsweise 0,5:1 bis 2:1, resultiert. Vor der Zugabe der Polyisocyanatkomponente b) können der Polymerisatkomponente a), d.h. der Dispersion bzw. Lösung der Polymerisate die üblichen Hilfs- und Zusatzmittel der Lacktechnologie einverleibt werden. Hierzu gehören beispielsweise Entschäumungsmittel, Verlaufhilfsmittel, Pigmente, Dispergiermittel für die Pigmentverteilung und dgl.

Bei der Vernetzung der erfindungsgemäßen Polyolkomponenten mit den Polyisocyanaten erfolgt eine weitgehende Fixierung der Elastomer- und der Thermoplastphasen, wodurch eine zu weitgehende Durchmischung verhindert wird. Dies wird in den Beispielen anhand der getrennt detektierbaren Glastemperaturen demonstriert.

Ein weiterer Gegenstand der Erfindung ist die Verwendung der erfindungsgemäßen Beschichtungsmittel. Sie eignen sich für praktisch alle Einsatzgebiete, in denen lösemittelhaltige, lösemittelfreie oder andersartige wäßrige Anstrich- und Beschichtungssysteme mit einem erhöhten Eigenschaftsprofil Verwendung finden, z.B. Beschichtung mineralischer Baustoff-Oberflächen wie Kalk- und/oder Zement-gebundene Putze, Gips enthaltende Oberflächen, Faser-Zement-Baustoffe, Beton; Lackierung und Versiegelung von Holz und Holzwerkstoffen wie Spanplatten, Holzfaserplatten sowie Papier; Lackierung und Beschichtung metallischer Oberflächen; Beschichtung und Lackierung asphalt- und bitumenhaltiger Straßenbeläge; Lackierung und Versiegelung diverser Kunststoffoberflächen; Beschichtung von Leder und Textilien; außerdem sind sie zur flächigen Verklebung diverser Werkstoffe geeignet, wobei gleichartige und unterschiedliche Werkstoffe miteinander verbunden werden.

Besonders bevorzugt ist die Beschichtung von Kunststoffoberflächen. Hier sind Beschichtungssysteme mit erhöhter Schlagzähigkeit auch bei tiefen Temperaturen (bis -20°C) und gleichzeitig guter Lösungs- und Chemikalienresistenz gefragt. Hervorragend sind die optischen Eigenschaften (Glanz, Harze-Wert etc.) solcher Zweikomponentenbeschichtungen, wie in den Anwendungsbeispielen zu erkennen ist.

Die Härtung bzw. Vernetzung des Zweikomponenten-Systems kann nach Applikation auf dem jeweiligen Substrat bei Temperaturen von 5 bis 300°C, vorzugsweise zwischen Raumtemperatur und 200°C, erfolgen.

In den nachfolgenden Beispielen beziehen sich alle Prozentangaben auf Gewichtsprozente.

### Herstellung von Pfropfpolymerisaten (Thermoplastkomponente als Pfropfgrundlage) im Eintopfverfahren

### Beispiele A und B

In einem 3 l-Rührreaktor mit wirksamem Rührer, Rückflußkühler sowie Gaseinlaß und -auslaß werden die Vorlagen I (vgl. Tabelle 1) vorgelegt und mit Stickstoff gespült. Anschließend wird Stickstoff in einem stetigen Strom übergeleitet und die Vorlage unter Rühren bei ca. 120 U/min auf 80°C erwärmt. Anschließend werden die in Tabelle 1 angegebenen Monomermischungen II und die Initiatorlösungen III sehr schnell zugegeben. Nach einer Reaktionszeit von 30 Min. wird der Zulauf der Monomermischungen IV und der Initiatorlösungen V gestartet; IV wird in 2 h, V in 4 h gleichmäßig zudosiert. Nach Beendigung des Zulaufs der Monomermischungen IV wird mit dem Zulauf der Monomermischungen VI begonnen; VI wird in 2 h gleichmäßig zudosiert. Anschließend werden die Monomermischungen VII und die Initiatorlösungen VIII in 1 h gleichmäßig zudosiert. Dann wird 1 h nachgerührt und mit IX nachaktiviert. Danach wird 4 h nachgerührt und auf Raumtemperatur abgekühlt. Mit den Lösungen X wird neutralisiert. Anschließend werden die Dispersionen filtriert und abgefüllt.

Die physikalisch-chemischen Kenndaten der wäßrigen Polymerisatdispersionen sind ebenfalls in Tabelle 1 aufgelistet.

**Tabelle 1**

| | **A** | **B** |
|---|---|---|
| I. Vorlage | | |
| Emulgator A (80 %ig) | 12,5 g | 12,5 g |
| entionisiertes Wasser | 500 g | 700 g |

| II. Monomergemisch (Batchphase) | | |
|---|---|---|
| Methacrylsäurehydroxypropylester | 8 g | 8 g |
| Methacrylsäuremethylester | 90 g | 90 g |

| III. Initiatorlösung (Batchphase) | | |
|---|---|---|
| Ammoniumperoxodisulfat | 0,5 g | 0,5 g |
| entionisiertes Wasser | 25 g | 25 g |

| IV. Monomermischung (Zulauf 1) | | |
|---|---|---|
| Methacrylsäurehydroxypropylester | 37 g | 37 g |
| Methacrylsäuremethylester | 404 g | 404 g |

| V. Initiatorlösung (Zulauf 1) | | |
|---|---|---|
| Ammoniumperoxodisulfat | 3 g | 3 g |
| Emulgator A (80 %ig) | 12,5 g | 12,5 g |
| entionisiertes Wasser | 600 g | 600 g |

| VI. Monomermischung (Zulauf 2) | | |
|---|---|---|
| Acrylsäure | 30 g | 30 g |
| Methacrylsäurehydroxypropylester | 124 g | 124 g |
| Methacrylsäuremethylester | 6 g | 6 g |
| Acrylsäure-n-butylester | 281 g | 281 g |

| VII. Monomermischung (Zulauf 3) | | |
|---|---|---|
| Acrylsäure-2-hydroxyethylester | 29,3 g | 58,5 g |
| Acrylsäure-n-butylester | 386,8 g | 357,6 g |
| Acrylsäure | 4,3 g | 4,3 g |
| | | |

| VIII. Initiatorlösung (Zulauf 2). | | |
|---|---|---|
| Ammoniumperoxodisulfat | 1 g | 1g |
| Emulgator A (80 %ig) | 10,7 g | 10,7 g |
| entionisiertes Wasser | 580 g | 580 g |
| | | |

| IX. Initiatorlösung (Nachaktivierung) | | |
|---|---|---|
| Ammoniumperoxodisulfat | 0,5 g | 0,5 g |
| entionisiertes Wasser | 10 g | 10 g |
| | | |

| X. Neutralisationslösung | | |
|---|---|---|
| Ammoniak (25 %ig) | 22 g | 27 g |
| entionisiertes Wasser | 20 g | 20 g |
| | | |
| Feststoffgehalt (Gew.-%) | 42,6 | 42,6 |
| pH-Wert | 7,0 | 7,0 |
| Viskosität bei RT und | | |
| D = 21,1 s⁻¹ (mPa.s) | 610 | 760 |
| mittlerer Teilchendurchmesser | | |
| (LKS) (nm) | 140 | 169 |
| Säurezahl (mg KOH/g Lff) | 10,8 | 12,1 |
| Leitfähigkeit (mS/cm) | 5,84 | 5,84 |
| Glastemperaturen (nach der | | |
| DSC-Methode) (°C) | -37/114,5 | -29/113,5 |

### Beispiele C und D

In einem 3 l-Rührreaktor mit wirksamem Rührer, Rückflußkühler sowie Gaseinlaß und -auslaß werden die Vorlagen I (vgl. Tabelle 2) vorgelegt und mit Stickstoff gespült. Anschließend wird Stickstoff in einem stetigen Strom übergeleitet und die Vorlage unter Rühren bei ca. 120 U/min. auf 80°C erwärmt. Anschließend werden die in Tabelle 2 angegebenen Monomermischungen II und die Initiatorlösungen III sehr schnell zugegeben. Nach einer Reaktionszeit von 30 Minuten wird der Zulauf der Monomermischungen IV und der Initiatorlösungen V gestartet; IV wird in 2 h, V in 4 h gleichmäßig zudosiert. nach Beendigung des Zulaufs der Monomennischungen IV wird mit dem Zulauf der Monomermischungen VI begonnen; VI wird in 2 h gleichmäßig zudosiert. Anschließend werden die Monomermischungen VII und die Initiatorlösungen VIII in 1 h gleichmäßig zudosiert. Dann wird 1 h nachgerührt und mit IX nachaktiviert. Danach wird 4 h nachgerührt und auf Raumtemperatur abgekühlt. Mit den Lösungen X wird neutralisiert. Anschließend werden die Dispersionen filtriert und abgefüllt.

Die physikalisch-chemischen Kenndaten der wäßrigen Polymerisatdispersionen sind ebenfalls in Tabelle 2 aufgelistet.

**Tabelle 2**

| | **C** | **D** |
|---|---|---|
| I. Vorlage | | |
| Emulgator A (80 %ig) | 12,5 g | 12,5 g |
| entionisiertes Wasser | 700 g | 700 g |

| II. Monomergemisch (Batchphase) | | |
|---|---|---|
| Methacrylsäurehydroxypropylester | 8 g | 8 g |
| Methacrylsäuremethylester | 90 g | 90 g |

| III. Initiatorlösung (Batchphase) | | |
|---|---|---|
| Ammoniumperoxodisulfat | 0,5 g | 0,5 g |
| entionisiertes Wasser | 25 g | 25 g |

| IV. Monomermischung (Zulauf 1) | | |
|---|---|---|
| Methacrylsäurehydroxypropylester | 37 g | 37 g |
| Methacrylsäuremethylester | 399 g | 404 g |
| Dimeres α-Methylstyrol (Regler) | 5 g | - |

| V. Initiatorlösung (Zulauf 1) | | |
|---|---|---|
| Ammoniumperoxodisulfat | 3 g | 3 g |
| Emulgator A (80 %ig) | 12,5 g | 12,5 g |
| entionisiertes Wasser | 600 g | 600 g |

| VI. Monomermischung (Zulauf 2) | | |
|---|---|---|
| Acrylsäure | 30 g | 30 g |
| Methacrylsäurehydroxypropylester | 124 g | 124 g |
| Methacrylsäuremethylester | 1 g | 6 g |
| Acrylsäure-n-butylester | 281 g | 281 g |
| Dimeres α-Methylstyrol (Regler) | 5 g | - |

| VII. Monomermischung (Zulauf 3) | | |
|---|---|---|
| Acrylsäure-2-hydroxyethylester | 58,5 g | 58,5 g |
| Acrylsäure-n-butylester | 353,3 g | 357,6 g |
| Acrylsäure | 4,3 g | 4,3 g |
| Dimeres α-Methylstyrol (Regler) | 4,3 g | - |

| VIII. Initiatorlösung (Zulauf 2) | | |
|---|---|---|
| Ammoniumperoxodisulfat | 1 g | 1 g |
| Emulgator A (80 %ig) | 10,7 g | 10,7 g |
| entionisiertes Wasser | 580 g | 580 g |

| IX. Initiatorlösung (Nachaktivierung) | | |
|---|---|---|
| Ammoniumperoxodisulfat | 0,5 g | 0,5 g |
| entionisiertes Wasser | 10 g | 10 g |

| X. Neutralisationslösung | | |
|---|---|---|
| Ammoniak (25 %ig) | 27 g | - |
| entionisiertes Wasser | 20 g | 30 g |
| N-Dimethylaminoethanol | - | 34 g |
| | | |
| Feststoffgehalt (Gew.-%) | 41,7 | 42,1 |
| pH-Wert | 7,2 | 7,4 |
| Viskosität bei RT und | | |
| D = 42,2 s⁻¹ (mPa.s) | 420 | 800 |
| mittlerer Teilchendurchmesser | | |
| (LKS) (nm) | 113 | 119 |
| Säurezahl (mg KOH/g Lff) | 11,1 | 10,6 |
| Leitfähigkeit (mS/cm) | 5,94 | 6,62 |
| Glastemperaturen (nach der DSC-Methode)(°C) | -17,3/35,7 | - |

### Herstellung von Pfropfpolymerisaten (Elastomerkomponente als Pfropfgrundlage) im Eintopfverfahren

### Beispiele E und G

In einem 3 l-Rührreaktor mit wirksamem Rührer, Rückflußkühler sowie Gaseinlaß und -auslaß werden die Vorlagen 1 (vgl. Tabelle 3) vorgelegt und mit Stickstoff gespült. Anschließend wird Stickstoff in einem stetigen Strom übergeleitet und die Vorlage unter Rühren bei ca. 120 U/min. auf 80°C erwärmt. Anschließend werden die in Tabelle 3 angegebenen Monomermischungen II und die Initiatorlösungen III schnell zugegeben. Nach einer Reaktionszeit von 30 Minuten wird der Zulauf der Monomermischungen IV und der Initiator-/Emulgatorlösungen V gestartet; sie werden gleichmäßig in 2 h zudosiert. Danach wird 30 min weitergerührt und anschließend die Monomermischungen VI und die Initiator-/Emulgatorlösungen VII in 4 h gleichmäßig zudosiert. Danach wird 30 min nachgerührt und dann mit der Initiatorlösung VIII nachaktiviert. Es wird anschließend 4 h nachgerührt, auf Raumtemperatur abgekühlt und mit den Lösungen IX neutralisiert. Anschließend werden die Dispersionen filtriert und abgefüllt.

Die physikalisch-chemischen Kenndaten der wäßrigen Polymerdispersionen sind ebenfalls in Tabelle 3 aufgelistet.

**Tabelle 3**

| | **E** | **F** | **G** |
|---|---|---|---|
| I. Vorlage | | | |
| Emulgator A (80 %ig) | 12,5 g | 12,5 g | 12,5 g |
| entionisiertes Wasser | 700 g | 700 g | 700 g |

| II. Monomergemisch (Batchphase) | | | |
|---|---|---|---|
| Methacrylsäure-2-hydroxyethylester | 7,6 g | 15,2 g | 15,2 g |
| Acrylsäure-n-butylester | 89,4 g | 81,8 g | 81,8 g |
| Acrylsäure | 1,0 g | 1,0 g | 1,0 g |

| III. Initiatorlösung (Batchphase) | | | |
|---|---|---|---|
| Ammoniumperoxodisulfat | 0,5 g | 0,5 g | 0,5 g |
| entionisiertes Wasser | 25 g | 25 g | 25 g |

| IV. Monomermischung (Zulauf 1) | | | |
|---|---|---|---|
| Methacrylsäure-2hydroxyethylester | 25,2 g | 50,3 g | 50,3 g |
| Acrylsäure-n-butylester | 293,9 g | 268,8 g | 268,8 g |
| Acrylsäure | 3,3 g | 3,3 g | 3,3 g |

| V. Initiatorlösung (Zulauf 1) | | | |
|---|---|---|---|
| Ammoniumperoxodisulfat | 1,0 g | 1,0 g | 1,0 g |
| Emulgator A (80 %ig) | 10,7 g | 10,7 g | 10,7 g |
| entionisiertes Wasser | 580 g | 580 g | 580 g |

| VI. Monomermischung (Zulauf 2) | | | |
|---|---|---|---|
| Methacrylsäurehydroxypropylester | 169 g | 169 g | 169 g |
| Methacrylsäuremethylester | 500 g | 500 g | 500 g |
| Acrylsäure-n-butylester | 281 g | 281 g | 281 g |
| Acrylsäure | 30 g | 30 g | 30 g |

| VII. Initiatorlösung (Zulauf 2) | | | |
|---|---|---|---|
| Ammoniumperoxodisulfat | 3 g | 3 g . | 3 g |
| Emulgator A (80 %ig) | 12,5 g | 12,5 g | 12,5 g |
| entionisiertes Wasser | 600 g | 600 g | 600 g |

| VIII. Initiatorlösung (Nachaktivierung) | | | |
|---|---|---|---|
| Ammoniumperoxodisulfat | 0,5 g | 0,5 g | 0,5 g |
| entionisiertes Wasser | 10 g | 10 g | 10 g |

| IX. Neutralisationslösung | | | |
|---|---|---|---|
| Ammoniak (25 %ig) | 24 g | 24 g | - |
| entionisiertes Wasser | 20 g | 20 g | 30 g |
| N-Dimethylaminoethanol | - | - | 31 g |
| | | | |
| Feststoffgehalt (Gew.-%) | 41,4 | 42,0 | 42,0 |
| pH-Wert | 7,5 | 7,7 | 7,7 |
| Viskosität bei RT und | | | |
| D = 42,2 s⁻¹ (mPa.s) | > 100 | 380 | 690 |
| mittlerer Teilchendurchmesser | | | |
| (LKS) (nm) | 98 | 99 | 98 |
| Säurezahl (mg KOH/g Lff) | 10,9 | 10,6 | 10,2 |
| Leitfähigkeit (mS/cm) | 4,92 | 5,20 | 3,28 |
| Glastemperaturen (nach der | | | |
| DSC-Methode) (°C) | -38,5/45,5 | -31,0/45,0 | - |

### Polyisocyanat 1

1,0 Val eines Isocyanuratgruppenhaltigen Polyisocyanates auf Basis von 1,6-Diisocyanatohexan (HDI) mit einem NCO-Gehalt von 21,5 %, einer mittleren NCO-Funktionalität von ca. 3,8 und einer Viskosität von 3000 mPa.s (23°C) werden bei Raumtemperatur unter Rühren mit 0,08 Val eines auf Methanol gestarteten, monofunktionellen Polyethylenoxidpolyethers mit einem mittleren Molekulargewicht von 350 versetzt und anschließend für 3 h auf 100°C erwärmt. Nach Abkühlen auf Raumtemperatur liegt ein praktisch farbloses klares Polyisocyanatgemisch vor. Der NCO-Gehalt beträgt 17,3 %, der Gehalt an Ethylenoxideinheiten beträgt 11,3 % und die Viskosität 3050 mPa.s (23°C).

### Polyisocyanat 2 (freie Deutsche Patentanmeldung 19 822 891.0)

850 g (4,39 Val) eines Isocyanuratgruppenhaltigen Polyisocyanates auf Basis von 1,6-Diisocyanatohexan (HDI) mit einem NCO-Gehalt von 21,7 %, einer mittleren NCO-Funktionalität von 3,5 (nach GPC), einem Gehalt an monomerem HDI von 0,1 % und einer Viskosität von 3000 mPa.s (23°C) werden bei 100°C unter trockenem Stickstoff und Rühren vorgelegt, innerhalb von 30 min mit 150 g (0,30 val) eines auf Methanol gestarteten, monofunktionellen Polyethylenoxidpolyethers eines mittleren Molekulargewichtes von 500, entsprechend einem NCO/OH-Äquivalentverhältnis von 14,6:1, versetzt und anschließend bei dieser Temperatur weitergerührt, bis der NCO-Gehalt der Mischung nach etwa 2 h auf den einer vollständigen Urethanisierung entsprechenden Wert von 17,2 % gefallen ist. Durch Zugabe von 0,01 g Zink(II)-2-ethyl-1-hexanoat wird die Allophanatisierungsreaktion gestartet. Dabei steigt die Temperatur des Reaktionsgemisches aufgrund der freiwerdenden Reaktionswärme bis auf 106°C an. Nach Abklingen der Exothermie, etwa 30 min nach Katalysatorzugabe, wird die Reaktion durch Zugabe von 0,01 g Benzoylchlorid abgebrochen und das Reaktionsgemisch auf Raumtemperatur abgekühlt. Es liegt ein praktisch farbloses klares Polyisocyanatgemisch mit folgenden Kenndaten vor:

| | |
|---|---|
| Festgehalt | 100% |
| NCO-Gehalt | 16,0 % |
| NCO-Funktionalität | 4,0 |
| Viskosität (23°C) | 3200 mPa.s |

### Anwendungsbeispiele

### Beispiele 1 und 2

Die in Tabelle 4 angegebenen Gewichtsteile der Polyoldispersionen A und B werden mit den in der Tabelle angegebenen Gewichtsteilen Wasser verdünnt und dann mit den in der Tabelle angegebenen Gewichtsteilen Polyisocyanat 1 intensiv vermischt (5 min mit Ultra-Turrax). Das hierbei eingestellte Äquivalentverhältnis NCO : OH beträgt 1,4.

Anschließend werden Filme mit Trockenschichtdicken von 100 bis 130 µm blasenfrei gespritzt und 1 h bei Raumtemperatur, 0,5 h bei 80°C und 16 h bei 60°C sowie 1 Tag im Normklima konditioniert. Die durchgeführten Zugversuche an freien Lackfilmen ermöglichen eine Vorhersage zum Einfluß eines auf Kunststoff applizierten Lackes auf das Zähigkeitsverhalten des lackierten Kunststoffteils. Diese Aussage beruht auf folgenden Erfahrungen:

Die Schlagzähigkeit von Kunststoffen wird in der Regel durch eine Lackierung beeinträchtigt, weil ein Riß in der Lackierung aufgrund seiner Kerbwirkung einen Bruch im Kunststoffteil auslösen kann. Dies führt dazu, daß lackierte Kunststoffteile im biaxialen Durchstoßversuch nach DIN 53 443 eine geringere Arbeitsaufnahme aufweisen als unlackierte Kunststoffe. Insbesondere bei tiefen Temperaturen kann die rißauslösende Wirkung der Lackierung so weit gehen, daß ein zähes Bruchverhalten des Kunststoffes durch die Lackierung in ein sprödes Bruchverhalten mit geringer Arbeitsaufnahme umschlägt.

Ein duktiles Bruchverhalten im Zugversuch an freien Lackfilmen korreliert erfahrungsgemäß mit einer geringen Beeinträchtigung der Schlagzähigkeit von Kunststoffen durch die entsprechende Lackierung. Als Maßzahl für eine geringe Beeinträchtigung der Schlagzähigkeit von Kunststoffen hat sich die Reißdehnung der freien Lackfilme bewährt. Je höher die Reißdehnung des freien Lackfilmes ist, desto geringer ist die Beeinträchtigung der Schlagzähigkeit von Kunststoffen durch die entsprechende Lackierung.

Weiterhin wurden an freien Lackfilmen dynamisch-mechanische Zugversuche (DMA) zum Glasübergangsverhalten durchgeführt. Anhand der Maxima des Verlustmoduls E" in Abhängigkeit von der Temperatur wurden jeweils zwei Glasübergänge und damit die Zweiphasigkeit der Lacke nachgewiesen.

An Filmen auf Glasplatten wurden die Beständigkeiten gegen Chemikalien sowie die Pendelhärten nach König bestimmt. Folgende Ergebnisse (vergl. Tabelle 4) wurden erhalten:

**Tabelle 4**

| Anwendungstechnische und physikalisch-chemische Kenndaten der Beispiele 1 und 2 (NCO : OH = 1,4) | | |
|---|---|---|
| | Beispiel 1 | Beispiel 2 |
| Gew.-Teile Komponente A | 234,7 | - |
| Gew.-Teile Komponente B | - | 234,7 |
| Gew.-Teile Wasser | 11 | 24 |
| Gew.-Teile Polyisocyanat 1 | 14,6 | 17,2 |
| Pendelhärte (nach König) [s] (bei Filmschichtdicke [µm]) | 43/ (127) | 46/ (103) |
| Filmtrübung *** | 1 | 1 |
| Glastemperaturen (DMA-Messungen) | -33°C/+42°C | -26°C/+39°C |
| Reißfestigkeit (RT) [MPa] (bei Filmschichtdicke [µm]) | 22,0/(135) | 25,0/(116) |
| Reißdehnung (RT) [%] | 27,8 | 35,0 |
| Reißfestigkeit (0°C) [MPa] | 30,1 | 35,6 |
| Reißdehnung (0°C)[%] | 15,4 | 17,4 |
| Reißfestigkeit (-20°C) [MPa] | 37,8 | 42,3 |
| Reißdehnung (-20°C)[%]* | 9,3 | 7,1 |
| | | |

| Teerfleckenbeständigkeit nach | | |
|---|---|---|
| 1 h | 1 | 0** |
| 3 h | 3 | 1 |
| 8 h | 3 | 2 |
| 24 h | 4 | 3 |

| | | |
|---|---|---|
| * eine einphasige Copolymerdispersion (gemäß EP-A 358 979) auf Acrylat-basis gehärtet mit einem allophanatisierten Polyisocyanat (gemäß EP-A 496 208 und EP-A 649-866) ergibt bei -20°C eine-Reißdehnung von nur 3,4 % (Vergleichssystem 1) | | |
| ** Benotungsskala: 0: sehr gut beständig 5: nicht beständig | | |
| *** Benotungsskala: 0: klar 5: sehr trüb | | |

### Beispiele 3 und 4

Die in Tabelle 5 angegebenen Gewichtsteile der Polydispersionen E und F werden wie in den Beispielen 1 und 2 mit den in der Tabelle 5 angegebenen Gewichtsteilen Wasser und Polyisocyanat 1 intensiv vermischt (5 min mit Ultra-Turrax). Das hierbei eingestellte Äquivalentverhältnis NCO : OH beträgt 1,4.

Anschließend werden Filme mit Trockenschichtdicken von 80 bis 110 µm blasenfrei gespritzt und 1 h bei Raumtemperatur, 0,5 h bei 80°C und 16 h bei 60°C sowie 1 Tag im Normklima konditioniert. Die durchgeführten Zugversuche an freien Lackfilmen ermöglichen eine Vorhersage zum Einfluß eines auf Kunststoff applizierten Lacks auf das Zähigkeitsverhalten des lackierten Kunststoffteils (Erklärung siehe bei Beispielen 1 und 2).

Weiterhin wurden an freien Lackfilmen dynamisch-mechanische Zugversuche (DMA) zum Glasübergangsverhalten durchgeführt. Anhand der Maxima des Verlustmoduls E" in Abhängigkeit von der Temperatur wurden jeweils zwei Glasübergänge und damit die Zweiphasigkeit der Lacke nachgewiesen.

An Filmen auf Glasplatten wurden die Beständigkeiten gegen Chemikalien sowie die Pendelhärten nach König bestimmt. Folgende Ergebnisse (vergl. Tabelle 5) wurden erhalten:

**Tabelle 5**

| Anwendungstechnische und physikalisch-chemische Kenndaten der Beispiele 2 und 3 (NCO : OH = 1,4) | | |
|---|---|---|
| | Beispiel 3 | Beispiel 4 |
| Gew.-Teile Komponente E | 100 | - |
| Gew.-Teile Komponente F | - | 100 |
| Gew.-Teile Wasser | 10,0 | 22,2 |
| Gew.-Teile Polyisocyanat 1 (75 gew.-%ig in Methoxypropylacetat) | 18,9 | 23,2 |
| Pendelhärte (nach König) [s] (bei Filmschichtdicke [µm]) | 101 (95) | 108 (85) |
| Filmtrübung * | 2 | 1 |
| Blasen im Film* | 1 | 1 |
| Glastemperaturen (DMA-Messungen) | -36°C/+42,4°C | -20,9°C/+48,6°C |
| Reißfestigkeit (-20°C) [N/mm²] | 53,6 | 56,3 |
| Reißdehnung (-20°C) [%] | 8,4 | 7,7 |
| | | |

| Teerfleckenbeständigkeit** nach | | |
|---|---|---|
| 1 h | 0 | 0 |
| 3 h | 0 | 0 |
| 8 h | 0-1 | 1 |
| 24 h | 1 | 1 |

| | | |
|---|---|---|
| * Benotungsskala: 0 : sehr klar 5 : sehr trüb | | |
| ** Benotungsskala: 0 : sehr gut beständig 5 : nicht beständig | | |

## Patentansprüche

1. Zweikomponenten-Polyurethan-Beschichtungsmittel enthaltend
a) eine wässrige Lösung oder Dispersion eines Pfropipolymerisats bestehend aus mindestens zwei Polyolkomponenten a1) und a2), die miteinander kovalent oder adsorptiv verknüpft sind und
b) eine Polyisocyanatkomponente mit einer Viskosität von höchstens 10.000 mPas bei 23°C bestehend aus mindestens einem organischen Polyisocyanat,
**dadurch gekennzeichnet, dass**
i) a) und b) in solchen Mengen eingesetzt werden, dass das NCO/OH-Äquivalentverhältnis 0,2 : 1 bis 5 : 1 beträgt,
ii) b) in a) emulgiert oder solubilisiert vorliegt,
iii) komponente a1) aufgebaut ist aus
a1 a) 0,4-7,7 Gew.-% Acrylsäure und/oder Methacrylsäure;
a1 b) 3,4-50,8 Gew.-% Acrylsäure-2-hydroxyethylester und/oder Acrylsäurehydroxypropylester und/oder Methacrylsäure-2-hydroxyethylester und/oder Methacrylsäurehydroxypropylester;
a1 c) 0-20 Gew.-% Methacrylsäuremethylester und/oder Acrylnitril und/oder Methacrylnitril und/oder Styrol bzw. substituierte Styrole als Comonomere mit Festigkeit und Härte verleihendem Charakter,
a1 d) 70-96 Gew.-% Methacrylsäurealkylester mit 2 bis 12 C-Atomen im Alkylrest und/oder Acrylsäurealkylester mit 1 bis 12 C-Atomen im Alkylrest als elastifizierende Komponenten;
a1 e) 0-5 Gew.-% vernetzende Comonomere wie z.B. Divinylbenzol, Ethylenglykoldi(meth)acrylat, Propylenglykoldi(meth)acrylat, Butylenglykoldi(meth)acrylat, Allyl(meth)acrylat,
wobei die Summe der Gew.-% von a1 a) bis a1 e) 100 ergibt und wobei die Glastemperatur unter -10°C liegt und
iv) komponente a2) aufgebaut ist aus
a2 a) 0,6-7,7 Gew.-% Acrylsäure und/oder Methacrylsäure;
a2 b) 6,8-50,8 Gew.-% Acrylsäure-2-hydroxyethylester und/oder Acrylsäurehydroxypropylester und/oder Methacrylsäure-2-hydroxyethylester und/oder Methacrylsäurehydroxypropytester;
a2 c) 30-80 Gew.-% Methacrylsäuremethylester und/oder Acrylnitril und/oder Methacrylnitril und/oder Styrol bzw. substituierte Styrole als Comonomere mit Festigkeit und Härte verleiheadem Charakter;
a2 d) 5-40 Gew.-% Methacrylsäurealkylester mit 2 bis 12 C-Atomen im Alkylrest und/oder Acrylsäurealkylester mit 1 bis 12 C-Atomen im Alkylrest als elastifizierende Komponenten;
a2 e) 0-5 Gew.-% vernetzende Comonomere wie z.B. Divinylbenzol, Ethylenglykoldi(meth)acrylat, Propylenglykoldi(meth)acrylat, Butylenglykoldi(meth)acrylat, Allyl(meth)acrylat,
wobei die Summe der Gew.-% von a2 a) bis a2 e) 100 ergibt und wobei die Glastemperatur über +10°C liegt.

2. Verfahren zur Herstellung der Zweikomponenten-Polyurethan-Beschichtungsmittel gemäß Anspruch 1, bei dem die Polyisocyanat-Komponente b) in der wässrigen Polyolkomponente a), die optional als Hilfs- und Zusatzmittel Entschäumungsmittel, Verlaufhilfsmittel, Pigmente, und/oder Dispergiermittel für die Pigmentverteilung enthält, emulgiert wird und die Mengen von a) und b) so gewählt sind, dass ein NCO/OH- Äquivalentverhältnis 0,2 : 1 bis 5 : 1 vorliegt.

3. Verwendung der Zweikomponenten-Polyurethan-Beschichtungsmittel nach Anspruch 1 zur Beschichtung und/oder Verklebung von Substraten.

## Claims

1. Two-component polyurethane coating composition comprising
a) an aqueous solution or dispersion of a graft polymer prepared from at least two polyol components a1) and a2), linked covalently or adsorptively to one another, and
b) a polyisocyanate component which has a viscosity of at the most 10 000 mPas at 23°C, composed of at least one organic polyisocyanate,
**characterized in that**
i) a) and b) are used in amounts such that the NCO/OH equivalent ratio is 0.2:1 to 5:1,
ii) b) is in emulsified or solubilized form in a),
iii) component a1) is constructed from
a1 a) 0.4-7.7 wt.-% acrylic acid and/or methacrylic acid
a1 b) 3.4-50.8 wt.-% acrylic acid 2-hydroxyethyl ester and/or acrylic acid hydroxypropyl ester and/or methacrylic acid 2-hydroxyethyl ester and/or methacrylic acid hydroxypropyl ester;
a1 c) 0-20 wt.-% methacrylic acid methyl ester and/or acrylonitrile and/or methacrylonitrile and/or styrene or substituted styrenes as comonomers with a character imparting strength and hardness;
a1 d) 70-96 wt.-% methacrylic acid alkyl esters with 2 to 12 C atoms in the alkyl residue and/or acrylic acid alkyl esters with 1 to 12 C atoms in the alkyl residue as elasticizing components;
a1 e) 0-5 wt.-% crosslinking comonomers such as, for example, divinylbenzene, ethylene glycol di(meth)acrylate, propylene glycol di(meth)acrylate, butylene glycol di(meth)acrylate, allyl (meth)acrylate,
where the wt.-% of a1 a) to a1 e) sum to 100 and where the glass transition temperature lies below -10°C, and
iv) component a2) is constructed from
a2 a) 0.6-7.7 wt.-% acrylic acid and/or methacrylic acid;
a2 b) 6.8-50.8 wt.-% acrylic acid 2-hydroxyethyl ester and/or acrylic acid hydroxypropyl ester and/or methacrylic acid 2-hydroxyethyl ester and/or methacrylic acid hydroxypropyl ester;
a2 c) 30-80 wt.-% methacrylic acid methyl ester and/or acrylonitrile and/or methacrylonitrile and/or styrene or substituted styrenes as comonomers with a character imparting strength and hardness;
a2 d) 5-40 wt.-% methacrylic acid alkyl esters with 2 to 12 C atoms in the alkyl residue and/or acrylic acid alkyl esters with 1 to 12 C atoms in the alkyl residue as elasticizing compounds;
a2 e) 0-5 wt.-% crosslinking comonomers such as, for example, divinylbenzene, ethylene glycol di(meth)acrylate, propylene glycol di(meth)acrylate, butylene glycol di(meth)acrylate, allyl (meth)acrylate,
where the wt.-% of a2 a) to a2 e) sum is 100 and where the glass transition temperature lies above +10°C.

2. Process for the production of the two-component polyurethane coating composition according to Claim 1, wherein the polyisocyanate component b) is emulsified in the aqueous polyol component a), which optionally comprises as auxiliaries and additives defoaming agents, flow-control agents, pigments and/or dispersing agents for the dispersal of pigment, and the amounts of a) and b) are chosen such that the NCO/OH equivalent ratio is 0.2:1 to 5:1.

3. Use of the two-component polyurethane coating composition according to Claim 1 for the coating and/or adhesive bonding of substrates.

## Revendications

1. Agent de revêtement de polyuréthanne à deux composants, contenant :
a) une solution ou dispersion aqueuse d'un polymère greffé, consistant en au moins deux composants polyol a1) et a2), qui sont reliés l'un à l'autre de manière covalente ou par adsorption, et
b) un composant polyisocyanate avec une viscosité d'au maximum 10 000 mPa.s à 23°C, consistant en au moins un polyisocyanate organique, **caractérisé en ce que**
i) a) et b) sont mis en oeuvre en des quantités telles que le rapport des équivalents NCO/OH se situe dans l'intervalle allant de 0,2:1 à 5:1,
ii) b) est présent dans a) de manière émulsionnée ou solubilisée,
iii) le composant a) est élaboré à partir de
a1 a) 0,4-7,7% en poids d'acide acrylique et/ou d'acide méthacrylique ;
a1 b) 3,4-50,8% en poids d'ester 2-hydroxyéthylique de l'acide acrylique et/ou d'ester hydroxypropylique de l'acide acrylique et/ou d'ester 2-hydroxyéthylique de l'acide méthacrylique et/ou d'ester hydroxypropylique de l'acide méthacrylique ;
a1 c) 0-20% en poids d'ester méthylique d'acide méthacrylique et/ou d'acrylonitrile et/ou de méthacrylonitrile et/ou de styrène ou de styrènes substitués comme comonomères avec un caractère conférant la résistance et la dureté ;
a1 d) 70-96% en poids d'ester alcoylique d'acide méthacrylique avec 2 à 12 atomes C dans le reste alcoyle et/ou d'ester alcoylique d'acide acrylique avec 1 à 12 atomes C dans le reste alcoyle comme composants élastifiants ;
a1 e) 0-5% en poids de comonomères réticulants, par exemple le divinylbenzène, le di(méth)acrylate d'éthylèneglycol, le di(méth)acrylate de propylèneglycol, le di(méth)acrylate de butylèneglycol, le (méth)acrylate d'allyle ;
où la somme des % en poids de a1 a) à a1 e) donne 100 et où la température de transition vitreuse se situe sous -10°C, et
iv) le composant a2) est élaboré à partir de
a2 a) 0,6-7,7% en poids d'acide acrylique et/ou d'acide méthacrylique ;
a2 b) 6,8-50,8% en poids d'ester 2-hydroxyéthylique de l'acide acrylique et/ou d'ester hydroxypropylique de l'acide acrylique et/ou d'ester 2-hydroxyéthylique de l'acide méthacrylique et/ou d'ester hydroxypropylique de l'acide méthacrylique ;
a2 c) 30-80% en poids d'ester méthylique d'acide méthacrylique et/ou d'acrylonitrile et/ou de méthacrylonitrile et/ou de styrène ou de styrènes substitués comme comonomères avec un caractère conférant la résistance et la dureté ;
a2 d) 5-40% en poids d'ester alcoylique d'acide méthacrylique avec 2 à 12 atomes C dans le reste alcoyle et/ou d'ester alcoylique d'acide acrylique avec 1 à 12 atomes C dans le reste alcoyle comme composants élastifiants ;
a2 e) 0-5% en poids de comonomères réticulants, par exemple le divinylbenzène, le di(méth)acrylate d'éthylèneglycol, le di(méth)acrylate de propylèneglycol, le di(méth)acrylate de butylèneglycol, le (méth)acrylate d'allyle ;
où la somme des % en poids de a2 a) à a2 e) donne 100 et où la température de transition vitreuse se situe au-delà de +10°C.

2. Procédé de préparation de l'agent de revêtement de polyuréthanne à deux composants, selon la revendication 1, dans lequel le composant polyisocyanate b) est émulsionné dans le composant polyol a) aqueux, qui contient des agents antimousse, des agents d'écoulement, des pigments et/ou des agents de dispersion pour la distribution du pigment, optionnels comme additifs et auxiliaires, et les quantités de a) et de b) sont choisies de sorte qu'un rapport des équivalents NCO/OH de 0,2:1 à 5:1 soit présent.

3. Utilisation de l'agent de revêtement de polyuréthanne à deux composants selon la revendication 1, pour le revêtement et/ou l'encollage de substrats.
